# EUROPEAN PATENT SPECIFICATION

(11) **EP 2 115 974 B1**
(45) Date of publication and mention of the grant of the patent: **19.12.2012**
(21) Application number: 08729856.8
(22) Date of filing: 14.02.2008
(51) Int. Cl.: H04L 12/58

(54) **EMAIL COMMUNICATIONS SYSTEM PROVIDING ELECTRONIC FILE ATTACHMENT FOLDER HIERARCHY AND RELATED METHODS**
E-MAIL-KOMMUNIKATIONSSYSTEM MIT ELEKTRONISCHER DATEIANHANGS-ORDNERHIERARCHIE UND ENTSPRECHENDE VERFAHREN
SYSTÈME DE COMMUNICATION PAR COURRIER ÉLECTRONIQUE FOURNISSANT UNE HIÉRARCHIE DE DOSSIER DE PIÈCE JOINTE DE FICHIER ÉLECTRONIQUE, ET PROCÉDÉS ASSOCIÉS

(30) Priority: 15.02.2007 US 889964 P
(43) Date of publication of application: 11.11.2009
(73) Proprietor: Research in Motion Limited, Waterloo, ON N2L 3W8 (CA)
(72) Inventor: ROY, Shaibal, Kolkata 700075 (IN)
(74) Representative: Phillips, Emily Elizabeth
(86) International application number: PCT/US2008/053956
(87) International publication number: WO 2008/101074

(56) References cited:
- WO-A-01/65336
- US-A1- 2006 031 336
- US-A1- 2006 168 543
- US-B1- 6 725 228

## Description

### Field of the Invention

The present invention relates to the field of communications systems, and, more particularly, to wireless electronic mail (email) communications systems and related methods.

### Background of the Invention

Electronic mail (email) has become an integral part of business and personal communications. As such, many users have multiple email accounts for work and home use. Moreover, with the increased availability of mobile cellular and wireless local area network (LAN) devices that can send and receive emails, many users wirelessly access emails stored in source mailboxes of different email storage servers (e.g., corporate email storage server, Yahoo, Hotmail, AOL, etc.).

With the increasing popularity of email has come an ever increasing number of emails that users have to manage. Moreover, as email service providers continue to increase mailbox size allocation for users, it is possible for users to have potentially thousands of emails stored in various files of their email folder hierarchy. More particularly, an email folder hierarchy is a set of folders that is displayed for a user on a computer, wireless handheld device, etc., that allows the user to navigate emails stored in the various folders. Typical email folder hierarchies resemble a windows file folder browser, for example, and may include folders such as an inbox folder, trash folder, saved emails folder; sent items folder, etc. It can also become challenging to reconcile emails within numerous folders in an email folder hierarchy with the email server that sends/receives emails on behalf of the email client on a particular user's computer/handheld device.

U.S. patent application publication no. 2006/0155810 is directed to a method for managing emails in a mobile terminal of a mobile email system. The mobile email system includes an email system and an email server coupled to a static terminal and in wireless communication with the mobile terminal. The static terminal has a folder-based data storage structure for storing emails received by a user of the static terminal. The email server is also configured to provide the received emails to the mobile terminal. The mobile terminal locally duplicates at least a portion of the state terminal folder-based data storage structure. The user is able to manage emails sent to a single address using the static and the mobile terminal. At the mobile terminal, a command is input from the user to move an email from a first folder of the local storage folder structure to a second folder of the local storage structure. The method further includes deleting the email from the local storage of the mobile terminal responsive to the user move command. The method further includes sending the move command from the mobile terminal to the email server.

US-A-20060168543 discloses an attachment browser wherein a representative image of each attachment is organised for display according to an attribute.

While such systems may be advantageous for reconciling emails between a wireless device and a server, another difficulty is how to manage the electronic file attachments that often accompany emails. At present, it is cumbersome for users, to attempt to separately store such attachments, and then navigate though a file manager program to append a desired attachment to another email, for example. Accordingly, in some applications it may be desirable to provide additional functionality for storing and retrieving email attachments.

The invention is set out in the claims.

FIG 1 is a schematic block diagram of an email system in accordance with one embodiment.

FIG. 2 is a schematic block diagram of an alternative embodiment of the email system of FIG. 1.

FIG. 3 is a schematic representation of an email folder hierarchy shown on the display of the device of FIG. 1.

FIGS. 4-6 are schematic representations of an electronic file attachment folder hierarchy corresponding to the email folder hierarchy of FIG. 3 and organized based upon a chronological order, subject, and sender, respectively.

FIG. 7 is a schematic representation of an email folder hierarchy shown on the display of the device of FIG. 2.

FIG. 8 is a schematic representation of an electronic file attachment folder hierarchy corresponding to the email folder hierarchy of FIG. 7.

FIG. 9 is a flow diagram illustrating email communications method aspects in accordance with an embodiment.

FIG. 10 is a schematic block diagram illustrating exemplary components of a mobile wireless communications device for use with the system of FIG. 2.

### Detailed Description of the Preferred Embodiments

The present description is made with reference to the accompanying drawings, in which preferred embodiments are shown. However, many different embodiments may be used, and thus the description should not be construed as limited to the embodiments set forth herein. Rather, these embodiments are provided so that this disclosure will be thorough and complete. Like numbers refer.to like elements throughout, and prime notation is used to indicated similar elements in alternative embodiments.

Generally speaking, an email communications system for operating over a communications network is disclosed herein which may include an email server for sending and receiving electronic mail (email) messages via the communications network, where at least some of the received email messages include electronic file attachments. The system may further include a communications device comprising a display, a user input device, and a processor for communicating with the email server. The processor may also cooperate with the display and user input device for displaying an email folder hierarchy for user navigation of the received email messages, and for displaying an electronic file attachment folder hierarchy corresponding to the email folder hierarchy for navigating the electronic file attachments.

More particularly, the electronic file attachment hierarchy may include a corresponding electronic file attachment folder for each email message folder in the email folder hierarchy. Also, the processor may provide the electronic file attachment folder hierarchy responsive to a command from the user input device to attach an electronic file to an outgoing email message. By way of example, the processor may organize electronic file attachments within electronic file attachment folder hierarchy folders based upon a chronological order, senders of respective received email messages, subjects of respective received email messages, etc.

The communications device may be a mobile wireless communications device, for example. Moreover, the system may further include a wireless communications network, and the email server and the processor may communicate via the wireless communications network. Furthermore, the email server may store the electronic file attachments not based upon the electronic file attachment hierarchy. As such, the system may further include a proxy server for relaying email messages and electronic file attachments between the email server, and for generating the electronic file attachment folder hierarchy for the processor. More particularly, the proxy server may include a WedDAV proxy module for generating the electronic file attachment folder hierarchy.

An email communications method aspect may include using an email server to send and receive electronic mail (email) messages via a communications network, where at least some of the received emails have electronic file attachments. The method may further include displaying an email folder hierarchy for user navigation of the received email messages on a display of a communications device, and displaying an electronic file attachment folder hierarchy on the display corresponding to the email folder hierarchy for navigating the electronic file attachments.

A computer-readable medium may have computer-executable instructions for causing a communications device to perform steps including communicating with an email server for sending and receiving electronic mail (email) messages via a communications network, where at least some of the received emails comprising electronic file attachments. The steps may further include displaying an email folder hierarchy for user navigation of the received email messages, and displaying an electronic file attachment folder hierarchy corresponding to the email folder hierarchy for navigating the electronic file attachments.

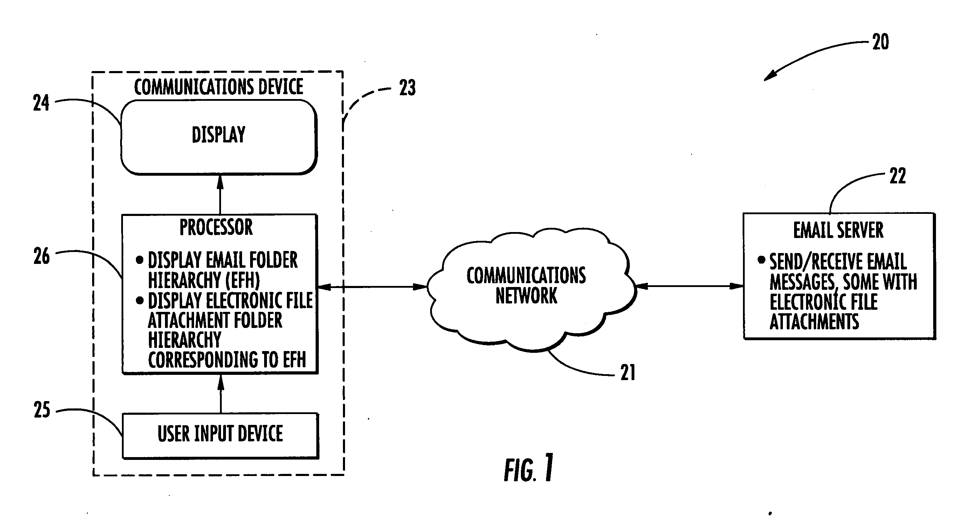

Referring initially to FIG. 1, an email communications system **20** is for operating over a communications network **21,** which may be a Local Area Network (LAN), the Internet/World Wide Web, etc. The system **20** illustratively includes an email server **22** for sending and receiving email messages via the communications network **21.** More particularly, depending upon the given implementation, the email messages may be sent to or received from other communications devices/email servers over the communications network **21,** as will be appreciated by those skilled in the art.

The system **20** further illustratively includes a communications device **23** including a display **24,** a user input device **25,** and a processor **26** for communicating with the email server **22** via the communications network **21.** By way of example, the communications device **23** may be a computer (e.g., personal computer (PC), Mac, etc.), as well as a wireless communications device such as a personal digital assistant (PDA) or a cellular phone with email capabilities, as will be discussed further below, although other suitable device may be used as well. The user input device **25** may thus include one or more of a keypad/keyboard, mouse, trackball, scroll wheel, stylus for a touch screen, etc., as will be appreciated by those skilled in the art. The processor **26** may include both hardware and software components, e.g., a microprocessor and accompanying operating system/email client application software, for example.

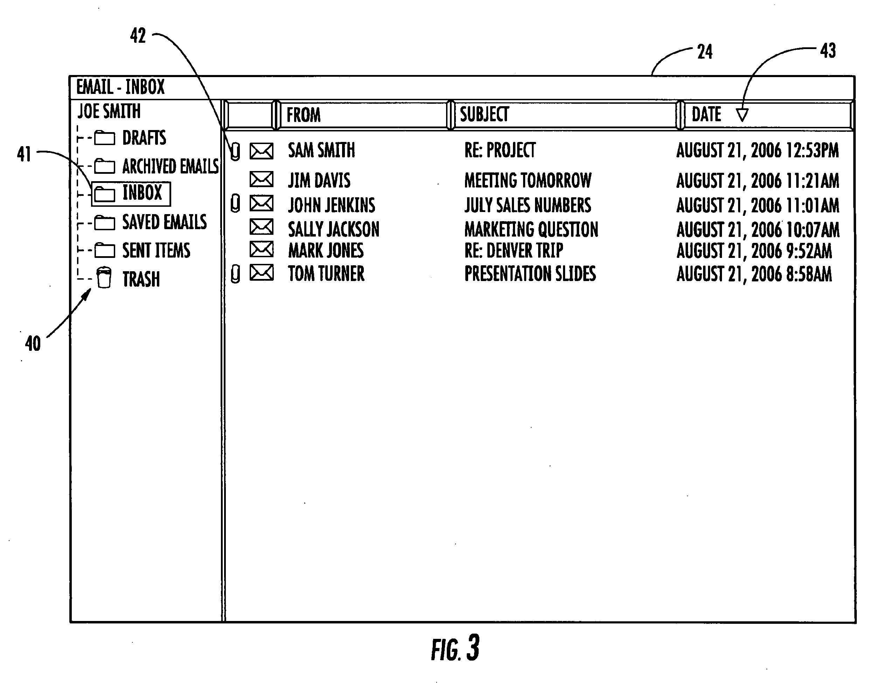

As will also be appreciated by those skilled in the art, many email messages are often accompanied by electronic file attachments. It is relatively easy for a user to organize/store emails using an email folder hierarchy **40,** as seen in FIG. 3. In the illustrated example, the email folder hierarchy **40** includes the following email message folders: drafts; archived emails; in box; saved emails; sent items; and trash. Of course, it will be appreciated that different email folders may be used in different embodiments.

Yet, organization and storage is generally more cumbersome with respect to electronic file attachments. That is, a user typically has to select or open the attachment from the corresponding email, and then choose to save the file in a designated directory, such as on a local c:\ drive on a computer. If the user wants to then attach the file to an outgoing email, the user then has to select the attach file option from the email client application (e.g., MS Outlook, GroupWise, Eudora, etc.), and navigate though a folder hierarchy for the disk drive until the file attachment is located. This may be particularly difficult if the user waits some time before performing the operation, as the particular directory a given attachment is stored in may be forgotten. Moreover, the attachment may have a name that is unintuitive to the user, making it difficult for the user to recognize the desired file from others in the directory without opening one or more file, and without the context of the email from which it came.

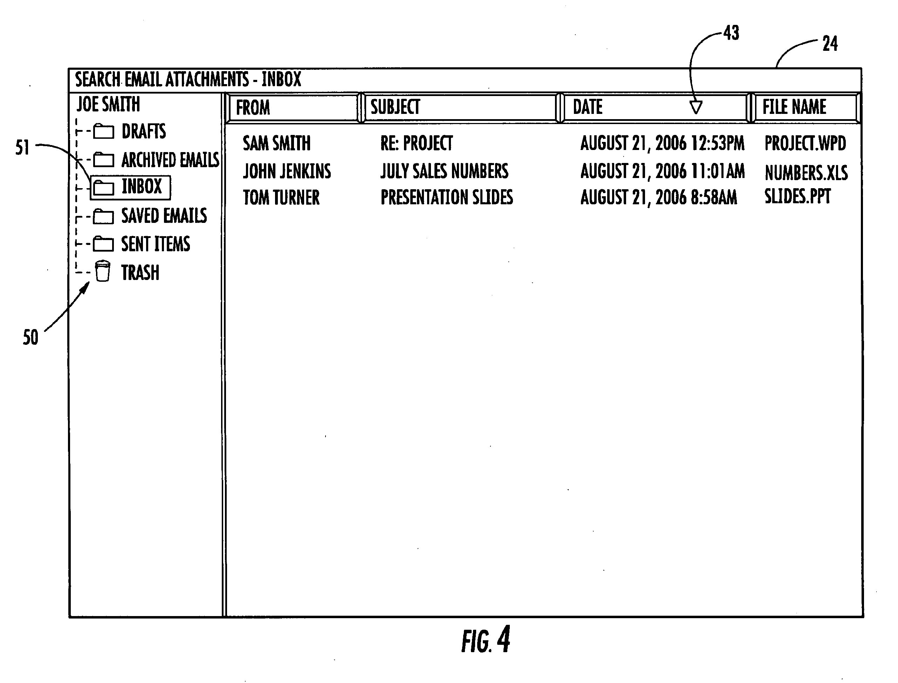

Referring now additionally to FIGS. 4-6, the processor **26** may not only ,cooperate with the display **24** and user input device **25** for displaying the email folder hierarchy **40** for user navigation of the received email messages, as noted above, but it may also advantageously cooperate with the display and user input device for displaying an electronic file attachment folder hierarchy **50** corresponding to the email folder hierarchy for navigating the electronic file attachments. That is, in the present example the electronic file attachment folder hierarchy **50** includes a corresponding electronic file attachment folder for each email message folder in the email folder hierarchy **40** (i.e., a drafts folder, archived emails folder, inbox folder, saved emails folder, sent items folder, and trash folder).

However, rather than displaying all of the emails messages present in the corresponding email folder hierarchy **40** folder, in the electronic file attachment folder hierarchy **50** only references to messages having file attachments are shown. In the example illustrated in FIGS. 3-6, the inbox folder is selected, as indicated by the highlight boxes **41, 51.** The inbox folder of the email folder hierarchy **40** has six email messages stored therein, only three of which have electronic file attachments, as indicated by the paperclip icons **42** (FIG. 3). Yet, in the corresponding inbox folder of the electronic file attachment folder hierarchy **50,** only the three emails from the email message inbox that have attachments are displayed. In the illustrated example, the name of the attachment is also displayed adjacent the corresponding sender/subject/date received data for the given email.

It should be noted that the email messages may include one or more attachments, all of which may be displayed in the email folder hierarchy **40.** For example, MIME standards permit each message to contain multiple attachments, as well as other messages. Accordingly, in some embodiments each message in an email folder may correspond to a folder in the attachment hierarchy, as opposed to a single file. That is, the attachment hierarchy may be one level deeper than the email hierarchy and include one or more attachments and/or attached messages, as will be appreciated by those skilled in the art.

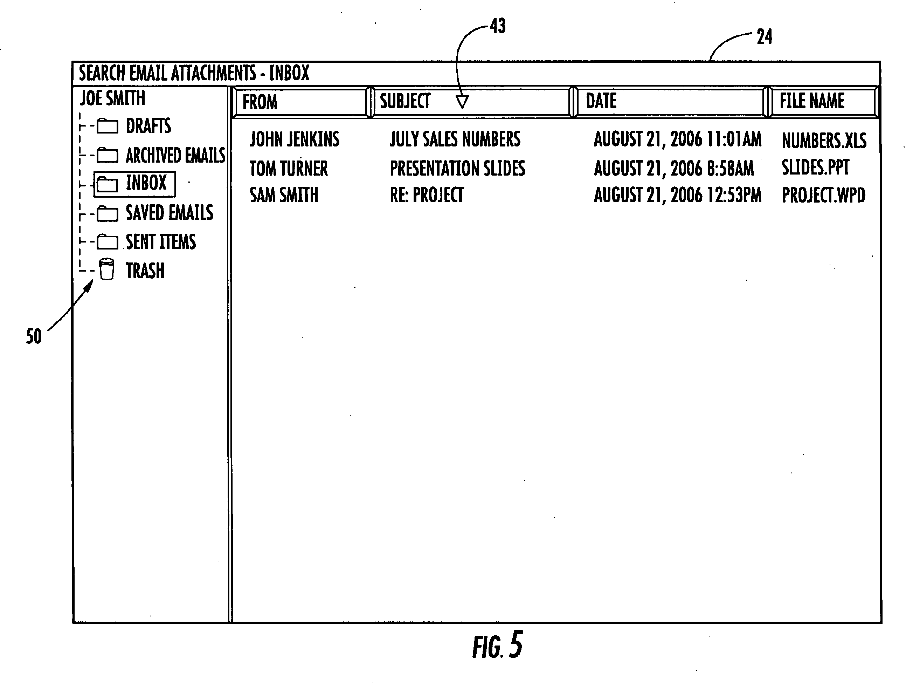

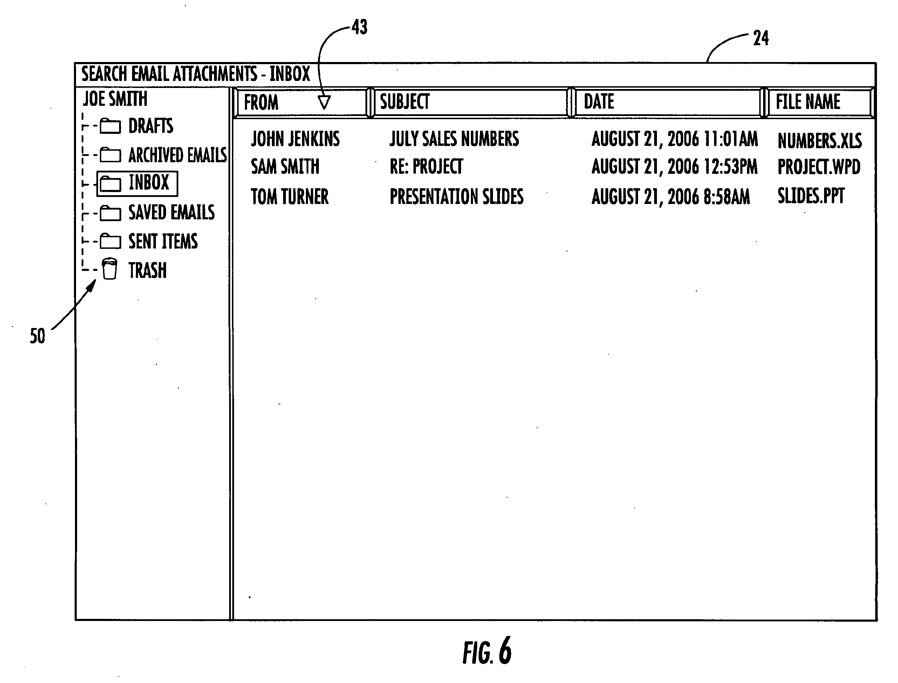

The processor **26** may organize electronic file attachments within electronic file attachment folder hierarchy **50** folders based upon a chronological order (i.e., received date), senders of respective received email messages, and subjects of respective received email messages, for example. For example, in FIG. 4 the attachments are arranged in a chronological order based upon the receipt date of their corresponding emails from most recent (top) to first received (bottom), as evidenced by the downward pointing triangle icon **43** (although other indicators or order selection approaches could be used). In FIG. 5, the attachments are arranged in alphabetical order by subject of the corresponding emails from top to bottom, and in FIG. 6 they are arranged in alphabetical order by sender name from top to bottom. The arrangement order may be user-selectable by clicking on the column headings (From, Subject, Date), as is common with email client application interfaces. Moreover, a reverse alphabetical or chronological order (i.e., bottom to top) may also be used. Additionally, other arrangements/ordering are also possible, such as alphabetically by name of the file attachment.

The user may wish to navigate electronic file attachments for a variety of reasons. In many cases, a user may wish to forward a received electronic file attachment to another user, but without the original message that accompanied the attachment. As such, in some embodiments the processor **26** may advantageously cause the electronic file attachment folder hierarchy **50** to be displayed responsive to a command from the user input device **25** via the email client application interface to attach an electronic file to an outgoing email message. More particularly, the email client application interface could provide a button or menu selection option to attach a file to an outgoing email message. There may be separate options for attaching a file using the electronic file attachment folder hierarchy **50,** as well as from a typical windows-style directory browser (e.g., c:\ drive, etc.). Alternatively, the attach file option may invoke a windows-style directory browser but with the addition of a separate email attachments folder, which when selected or "drilled down" on by the user will display the full electronic file attachment folder hierarchy **50** for further navigation, as will be appreciated by those skilled in the art.

Users may also wish to access electronic file attachments to perform other operations. The processor **26** may advantageously allow the user to navigate the electronic file attachments and then perform traditional windows-type operations, such as dragging and dropping the attachment to a printer icon, a disk/zip drive, etc.

In addition, the processor **26** may also add or remove references to electronic file attachments as the corresponding emails are deleted or moved between different email folder hierarchy folders. For example, if a user moved an email message with an attachment from the inbox folder to the trash folder of the email folder hierarchy **40,** the then trash folder of the corresponding electronic file attachment hierarchy **50** would then display the attachment (and the electronic file attachment inbox folder would not). In other words, the processor **26** preferably updates the folders and attachments shown in the electronic file attachment hierarchy **50** accordingly based upon changes in the email folder hierarchy **40.**

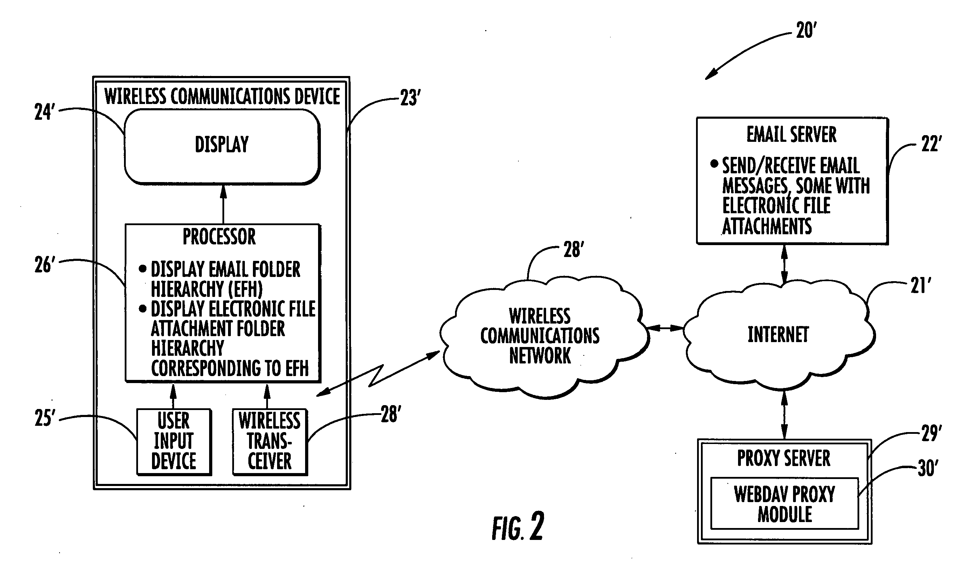

Turning now to FIG. 2, an alternative embodiment of the system **20'** illustratively includes a mobile wireless communications device **23'**, such as a cellular or wireless local area network (LAN) device with email capability. Moreover, the system **20'** further illustratively includes a wireless communications network **28'** (e.g., cellular network, wireless LAN, etc.), and the mobile wireless communications device **23'** also includes a wireless transceiver **28'** and associated antenna (not shown) for communicating with the wireless communications network, as will be appreciated by those skilled in the art. In addition, in the present example the communications network **21'** is the Internet, and the wireless communications network **28'** and the email server **22'** communicate thereover.

In such an arrangement, the email server **22'** may be part a corporate or Internet Service Provider (ISP) (e.g., Google, Hotmail, AOL, etc.) system. A proxy server **29'** may be used to forward or relay email messages from one or more email servers **22'** to a given wireless communications device **23',** as will be appreciated by those skilled in the art. For example, the proxy server **29'** may include a mail user agent (MUA) for this purpose. More particularly, a MUA is an application which uses a technique called polling to relay messages from the email server(s) **22'** to the email client application at a user's computer or mobile wireless communications device. While a MUA may run on a user's personal computing device (mobile or stationary) in some embodiments, in the illustrated example it is on the shared proxy server **29'** that may advantageously check for new email messages on behalf of a multitude of such users. More particularly, polling is the retrieval of incoming messages from other users at the email server **22'** and delivery of these messages to a designated user mailbox and/or the wireless communications device **23'.**

Due to the relatively limited bandwidth of cellular communications links compared with land lines, as well as the relatively limited processing/memory capacity of mobile handheld wireless communications devices relative to desktop/laptop computers, the proxy server **29'** will typically not forward email attachments to the wireless communications device **23'** unless'specifically requested by the user. Yet, common email server platforms (e.g., IMAP, Exchange, Notes, etc.) typically store electronic file attachments in a common directory, and not based upon based upon the electronic file attachment hierarchy **50.** As such, in the illustrated configuration it may be difficult for the email client application on the wireless communications device **23'** to otherwise associate file attachments with an electronic file attachment folder hierarchy **50** that corresponds to the email folder hierarchy **40.**

To this end, the proxy server **29'** may advantageously include an optional proxy module, such as a World Wide Web Distributed Authoring and Versioning (WebDAV) module, that provides an interface between the various email server platforms and email client applications. The WebDAV proxy module may advantageously obtain the requisite email message and attachment property information (last modified, size, etc.), such as with a GET PROP command, and generate the electronic file attachment folder hierarchy **50** for the wireless communications device **23'** based thereon, as will be appreciated by those skilled in the art.

In some applications, the WebDAV module **30'** may advantageously provide electronic file attachment folder hierarchy **50** information only at the current level at which the user is navigating. That is, rather than uploading the entire electronic file attachment folder hierarchy **50** to the user's device every time a file attachment request, etc. is made by the user, the WebDAV module **30'** may selectively provide this information in stages to conserve communications bandwidth, since the user may only be interested in navigating a single top-level folder, for example. It should be noted that other types of proxy modules and platforms could be used, such as a file system interface, or Windows NT or LINUX based interface, for example.

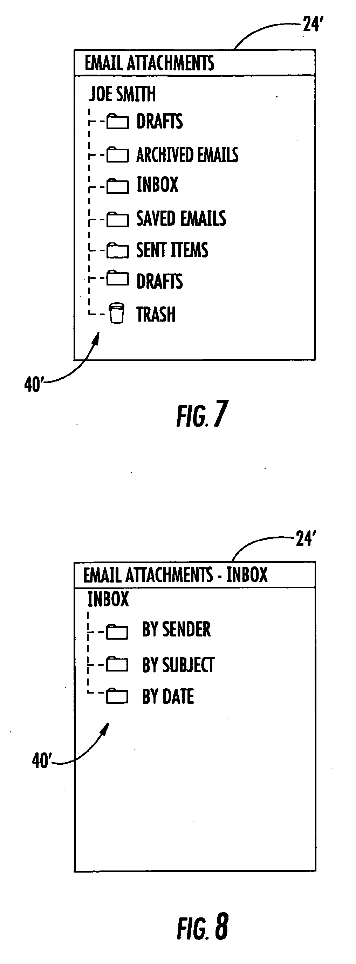

In the case of a wireless communications device display **24',** the reduced size of the display as compared to a desktop/laptop display may make a different email client application interface more appropriate. An exemplary email folder hierarchy **41'** for the wireless communications device display **24'** is shown in FIG. 7, and a corresponding exemplary electronic file attachment folder hierarchy **50'** is shown in FIG. 8. Here, rather than providing a multi-column screen as in FIGS. 3-6, just the electronic file attachment folder hierarchy **50'** is shown initially. Then, when a user selects or drills down on a particular folder (the inbox folder in the present example), three sub-folders are displayed which correspond to chronological ("By Date"), subject ("By Subject"), and sender ("By Sender") organization. When a user selects/drills down on one of these sub-folders, a list of attachments and associated email message information is displayed in the selected organization order (i.e., chronological, subject, or sender order), as in FIGS. 4-6 above. Other arrangements are also possible.

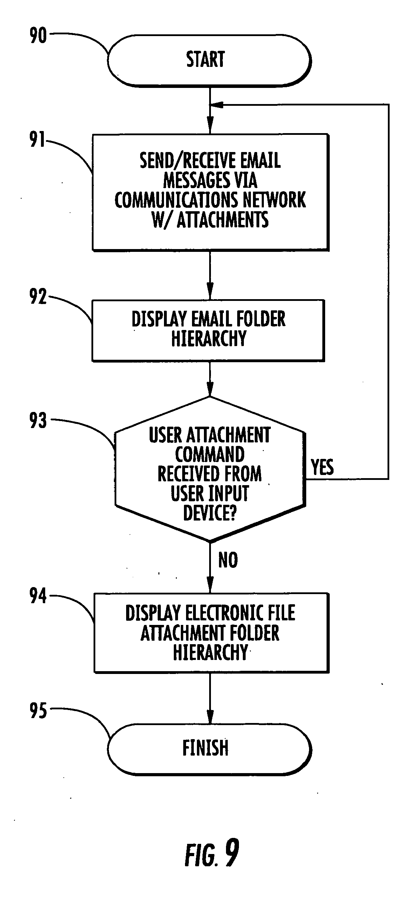

An email communications method aspect is now described with reference to FIG. 9. Beginning at Block **90,** the method illustratively includes using the email server **22** to send and receive electronic mail (email) messages via the communications network **21,** where at least some of the received emails have electronic file attachments, at Block **91.** The method further illustratively includes displaying an email folder hierarchy **40** for user navigation of the received email messages on the display **24** of the communications device **23,** at Block **93,** and displaying an electronic file attachment folder hierarchy **50** on the display corresponding to the email folder hierarchy for navigating the electronic file attachments, at **Block 94,** thus concluding the illustrated method (Block **95**). As noted above, the electronic file attachment folder hierarchy **50** may be displayed responsive to a command from the user input device **25** to attach an electronic file to an outgoing email message, for example, at Block **93.**

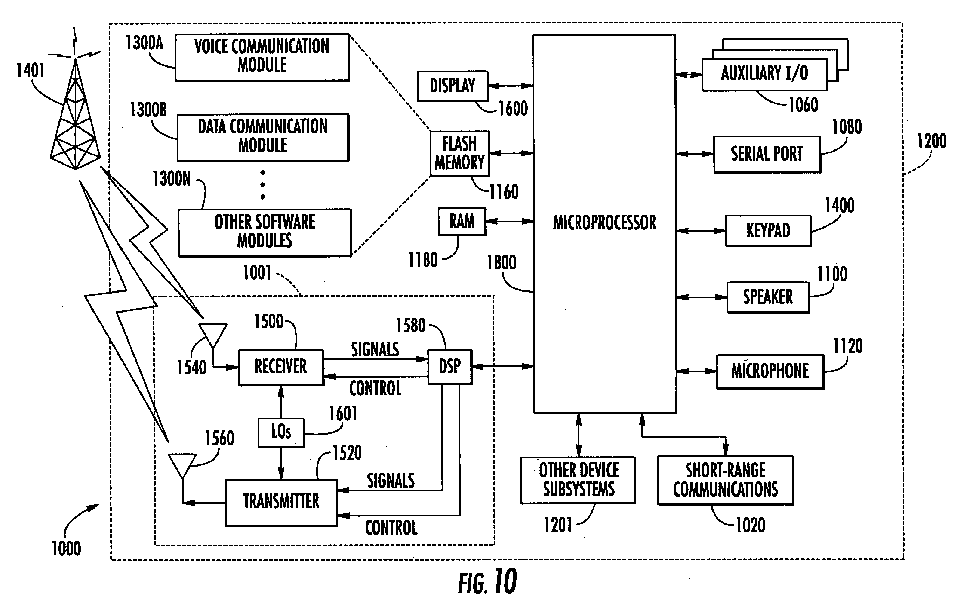

One example of a hand-held mobile wireless communications device **1000** that may be used in accordance the system **20** is further described in the example below with reference to FIG. 10. The device **1000** illustratively includes a housing **1200,** a keypad **1400** and an output device **1600.** The output device shown is a display **1600.** which is preferably a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user.

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 10. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** is preferably a two-way RF communications device having voice and data communications capabilities. In addition, the mobile device **1000** preferably has the capability to communicate with other computer systems via the Internet.

Operating system software executed by the processing device **1800** is preferably stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **1401.** Preferably, the PIM data items are seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, PCS, GSM, etc. Other types of data and voice networks, both separate and integrated, may also be utilized with the mobile device **1000.**

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. An email communications system (20') for operating over a communications network (21'), the email communications system comprising:
an email server (22') for sending and receiving electronic mail (email) messages via the communications network, at least some of the received email messages comprising electronic file attachments;
a communications device (23') comprising
a display (24'),
a user input device (25'), and
a processor (26') for communicating with said email server and cooperating with said display and user input device for displaying an email folder hierarchy (40) for user navigation of the received email messages, and for displaying an electronic file attachment folder hierarchy (50) corresponding to the email folder hierarchy for navigating the electronic file attachments;
said email server storing the electronic file attachments not based upon the electronic file attachment hierarchy; and **characterised by** :
a proxy server (29') for relaying the email messages and the electronic file attachments between said email server and generating the electronic file attachment folder hierarchy for said processor.

2. The email communications system (20') of Claim 1 wherein the electronic file attachment folder hierarchy (50) comprises a corresponding electronic file attachment folder for each email message folder in the email folder hierarchy.

3. The email communications system (20') of Claim 1 wherein said processor displays the electronic file attachment folder hierarchy (50) responsive to a command from said user input device to attach an electronic file to an outgoing email message.

4. The email communications system (20') of Claim 1 wherein said processor (26') organizes electronic file attachments within electronic file attachment folder hierarchy folders based upon a chronological order.

5. The email communications system (20') of Claim 1 wherein said processor (26') organizes electronic file attachments within electronic file attachment folder hierarchy folders based upon senders of respective received email messages.

6. The email communications system (20') of Claim 1 wherein said processor organizes electronic file attachments within electronic file attachment folder hierarchy folders based upon subjects of respective received email messages.

7. The email communications system (20') of Claim 1 wherein said communications device comprises a mobile wireless communications device.

8. A communications device (23') for communicating with an email server (22') and a proxy server (29') over a communications network (21'), the email server for sending and receiving electronic mail (email) messages via the communications network, at least some of the received email messages comprising electronic file attachments and the proxy server relaying the email messages and the electronic file attachments from the email server, the communications device comprising:
a display (24');
a user input device (25'); and
a processor (26') for communicating with the email server and cooperating with said display and user input device for displaying an email folder hierarchy (40) for user navigation of the received email messages, and for displaying an electronic file attachment folder hierarchy (50) generated by the proxy server corresponding to the email folder hierarchy for navigating the electronic file attachments.

9. The communications device (23') of Claim 8 wherein the electronic file attachment folder hierarchy (50) comprises a corresponding electronic file attachment folder for each email message folder in the email folder hierarchy.

10. The communications device (23') of Claim 8 wherein said processor (26') displays the electronic file attachment folder hierarchy (50) responsive to a command from said user input device to attach an electronic file to an outgoing email message.

11. An email communications method comprising:
using an email server (22') to send and receive electronic mail (email) messages via a communications network (21'), at least some of the received email messages comprising electronic file attachments;
displaying an email folder hierarchy (40) for user navigation of the received email messages on a display of a communications device (22'); and
displaying an electronic file attachment folder hierarchy (50) on the display corresponding to the email folder hierarchy for navigating the electronic file attachments.
the email server storing the electronic file attachments not based upon the electronic file attachment hierarchy; and **characterized by** :
using a proxy server to relay the email messages and the electronic file attachments from the email server to generate the electronic file attachment folder hierarchy.

12. The method of Claim 11 wherein the electronic file attachment folder hierarchy (50) comprises a corresponding electronic file attachment folder for each email message folder in the email folder hierarchy.

13. The method of Claim 11 wherein displaying the electronic file attachment folder hierarchy (50) comprises displaying the electronic file attachment folder hierarchy responsive to a command from a user input device of the communications device to attach an electronic file to an outgoing email message.

14. The method of Claim 11 further comprising organizing electronic file attachments within electronic file attachment folder hierarchy folders based upon a chronological order.

## Patentansprüche

1. E-Mail-Kommunikations-System (20'), das geeignet ist, über ein Kommunikationsnetz (21') zu arbeiten, wobei das E-Mail-Kommunikations-System Folgendes aufweist:
einen E-Mail-Server (22') zum Senden und Empfangen von E-Mail-Nachrichten über das Kommunikationsnetz, wobei mindestens einige der empfangenen E-Mail-Nachrichten elektronische Dateianhänge aufweisen,
eine Kommunikationsvorrichtung (23') mit
einer Anzeige (24'),
einer Benutzereingabevorrichtung (25') und
einem Prozessor (26') zum Kommunizieren mit dem E-Mail-Server und Zusammenarbeiten mit der Anzeige und der Benutzereingabevorrichtung zum Anzeigen einer E-Mail-Ordner-Hierarchie (40) zum Navigieren durch die empfangenen E-Mail-Nachrichten von dem Benutzer und zum Anzeigen einer Elektronischer-Dateianhangs-Ordner-Hierarchie (50), die der E-Mail-Ordner-Hierarchie zum Navigieren durch die elektronischen Dateianhänge entspricht,
wobei der E-Mail-Server die elektronischen Dateianhänge nicht aufgrund der Elektronischer-Dateianhangs-Hierarchie speichert, und **gekennzeichnet durch**
einen Proxyserver (29') zum Weiterleiten der E-Mail-Nachrichten und der elektronischen Dateianhänge zwischen dem E-Mail-Server und Erzeugen der Elektronischer-Dateianhangs-Ordner-Hierarchie für den Prozessor.

2. E-Mail-Kommunikations-System (20') nach Anspruch 1, wobei die Elektronischer-Dateianhangs-Ordner-Hierarchie (50) einen entsprechenden Elektronischer-Dateianhangs-Ordner für jeden E-Mail- Ordner in der E-Mail-Nachrichten-Ordner-Hierarchie aufweist.

3. E-Mail-Kommunikations-System (20') nach Anspruch 1, wobei der Prozessor als Reaktion auf einen Befehl von der Benutzereingabevorrichtung , eine elektronische Datei an eine ausgehende E-Mail-Nachricht anzuhängen, die Elektronischer-Dateianhangs-Ordner-Hierarchie (50) anzeigt.

4. E-Mail-Kommunikations-System (20') nach Anspruch 1, wobei der Prozessor (26') elektronische Dateianhänge innerhalb von Elektronischer-Dateianhangs-Ordner-Hierarchie-Ordnern aufgrund von einer chronologischen Reihenfolge organisiert.

5. E-Mail-Kommunikations-System (20') nach Anspruch 1, wobei der Prozessor (26') elektronische Dateianhänge innerhalb von Elektronischer-Dateianhangs-Ordner-Hierarchie-Ordnern aufgrund von Absendern von entsprechenden empfangenen E-Mail-Nachrichten organisiert.

6. E-Mail-Kommunikations-System (20') nach Anspruch 1, wobei der Prozessor elektronische Dateianhänge innerhalb von Elektronischer-Dateianhangs-Ordner-Hierarchie-Ordnern aufgrund von Betreffen von entsprechenden empfangenen E-Mail-Nachrichten organisiert.

7. E-Mail-Kommunikations-System (20') nach Anspruch 1, wobei die Kommunikationsvorrichtung eine mobile Drahtloskommunikationsvorrichtung aufweist.

8. Kommunikationsvorrichtung (23') zum Kommunizieren mit einem E-Mail-Server (22') und einem Proxyserver (29') über ein Kommunikationsnetz (21'), wobei der E-Mail-Server zum Senden und Empfangen von E-Mail-Nachrichten über das Kommunikationsnetz geeignet ist, wobei mindestens einige der empfangenen E-Mail-Nachrichten elektronische Dateianhänge aufweisen und der Proxyserver die E-Mail-Nachrichten und die elektronischen Dateianhänge von dem E-Mail-Server weiterleitet, wobei die Kommunikationsvorrichtung Folgendes aufweist:
eine Anzeige (24'),
eine Benutzereingabevorrichtung (25') und
einen Prozessor (26') zum Kommunizieren mit dem E-Mail-Server und Zusammenarbeiten mit der Anzeige und der Benutzereingabevorrichtung zum Anzeigen einer E-Mail-Ordner-Hierarchie (40) zum Navigieren durch die empfangenen E-Mail-Nachrichten von dem Benutzer und zum Anzeigen einer Elektronischer-Dateianhangs-Ordner-Hierarchie (50), die von dem Proxyserver erzeugt ist, die einer E-Mail-Ordner-Hierarchie zum Navigieren durch die elektronischen Dateianhänge entspricht.

9. Kommunikationsvorrichtung (23') nach Anspruch 8, wobei die Elektronischer-Dateianhangs-Ordner-Hierarchie (50) einen entsprechenden Elektronischer-Dateianhangs-Ordner für jeden E-Mail-Nachrichten-Ordner in der E-Mail-Nachrichten-Ordner-Hierarchie aufweist.

10. Kommunikationsvorrichtung (23') nach Anspruch 8, wobei der Prozessor (26') als Reaktion auf einen Befehl von der Benutzereingabevorrichtung, eine elektronische Datei an eine ausgehende E-Mail-Nachricht anzuhängen, die Elektronischer-Dateianhangs-Ordner-Hierarchie (50) anzeigt.

11. E-Mail-Kommunikations-Verfahren mit:
Verwenden eines E-Mail-Servers (22'), um E-Mail-Nachrichten über ein Kommunikationsnetz (21') zu senden und zu empfangen, wobei mindestens einige der empfangenen E-Mail-Nachrichten elektronische Dateianhänge aufweisen,
Anzeigen einer E-Mail-Ordner-Hierarchie (40) zum Navigieren durch die empfangenen E-Mail-Nachrichten von dem Benutzer an einer Anzeige einer Kommunikationsvorrichtung (22') und
Anzeigen einer Elektronischer-Dateianhangs-Ordner-Hierarchie (50) an der Anzeige, die der E-Mail-Ordner-Hierarchie zum Navigieren durch die elektronischen Dateianhänge entspricht,
wobei der E-Mail-Server die elektronischen Dateianhänge nicht aufgrund der Elektronischer-Dateianhang-Hierarchie speichert, und **gekennzeichnet durch**
Verwenden eines Proxyservers, um die E-Mail-Nachrichten und die elektronischen Dateianhänge von dem E-Mail-Server weiterzuleiten, um die Elektronischer-Dateianhangs-Ordner-Hierarchie zu erzeugen.

12. Verfahren nach Anspruch 11, wobei die Elektronischer-Dateianhangs-Ordner-Hierarchie (50) einen entsprechenden Elektronischer-Dateianhangs-Ordner für jeden E-Mail-Nachrichten-Ordner in der E-Mail-Ordner-Hierarchie aufweist.

13. Verfahren nach Anspruch 11, wobei das Anzeigen der Elektronischer-Dateianhangs-Ordner-Hierarchie (50) ein Anzeigen der Elektronischer-Dateianhangs-Ordner-Hierarchie als Reaktion auf einen Befehl von der Benutzereingabevorrichtung der Kommunikationsvorrichtung aufweist, eine elektronische Datei an eine ausgehende E-Mail-Nachricht anzuhängen.

14. Verfahren nach Anspruch 11, ferner mit Organisieren elektronischer Dateianhänge innerhalb von Elektronischer-Dateianhangs-Ordner-Hierarchie-Ordnern aufgrund einer chronologischen Reihenfolge.

## Revendications

1. Système de communication de courriel (20') destiné à fonctionner sur un réseau de communication (21'), le système de communication de courriel comprenant :
un serveur de courriel (22') destiné à envoyer et recevoir des messages de courrier électronique (courriel) via le réseau de communication, au moins certains des messages de courriel reçus comprenant des pièces jointes faites de fichiers électroniques ;
un dispositif de communication (23') comprenant :
un écran d'affichage (24') ;
un dispositif de saisie par l'utilisateur (25') ; et
un processeur (26') destiné à communiquer avec ledit serveur de courriel et à coopérer avec ledit écran d'affichage et ledit dispositif de saisie par l'utilisateur pour afficher une hiérarchie de dossiers de courriel (40) afin que l'utilisateur navigue dans les messages de courriel reçus et pour afficher une hiérarchie de dossiers de pièces jointes faites de fichiers électroniques (50) correspondant à la hiérarchie de dossiers de courriel, afin de permettre une navigation dans les pièces jointes faites de fichiers électroniques ;
ledit serveur de courriel stockant les pièces jointes faites de fichiers électroniques sans se fonder sur la hiérarchie des pièces jointes faites de fichiers électroniques ; et
**caractérisé par** :
un serveur mandataire (29') destiné à relayer les messages de courriel et les pièces jointes faites de fichiers électroniques à partir dudit serveur de courriel et à produire la hiérarchie de dossiers de pièces jointes faites de fichiers électroniques pour ledit processeur.

2. Système de communication de courriel (20') selon la revendication 1, dans lequel la hiérarchie de dossiers de pièces jointes faites de fichiers électroniques (50) comprend un dossier de pièces jointes faites de fichiers électroniques correspondant pour chaque dossier de messages de courriel dans la hiérarchie des dossiers de courriel.

3. Système de communication de courriel (20') selon la revendication 1, dans lequel ledit processeur affiche la hiérarchie de dossiers de pièces jointes faites de fichiers électroniques (50) en réponse à une instruction provenant dudit dispositif de saisie par l'utilisateur, de joindre un fichier électronique à un message de courriel sortant.

4. Système de communication de courriel (20') selon la revendication 1, dans lequel ledit processeur (26') organise les pièces jointes faites de fichiers électroniques, dans les dossiers composant la hiérarchie de dossiers de pièces jointes faites de fichiers électroniques, en se fondant sur un ordre chronologique.

5. Système de communication de courriel (20') selon la revendication 1, dans lequel ledit processeur (26') organise les pièces jointes faites de fichiers électroniques, dans les dossiers composant la hiérarchie de dossiers de pièces jointes faites de fichiers électroniques, en se fondant sur les expéditeurs desdits messages de courriel reçus respectifs.

6. Système de communication de courriel (20') selon la revendication 1, dans lequel ledit processeur (26') organise les pièces jointes faites de fichiers électroniques, dans les dossiers composant la hiérarchie de dossiers de pièces jointes faites de fichiers électroniques, en se fondant sur les objets desdits messages de courriel reçus respectifs.

7. Système de communication de courriel (20') selon la revendication 1, dans lequel ledit dispositif de communication consiste en un dispositif de communication mobile sans fil.

8. Dispositif de communication (23') destiné à communiquer avec un serveur de courriel (22') et un serveur mandataire (29') sur un réseau de communication (21'), le serveur de courriel étant destiné à envoyer et recevoir des messages de courrier électronique (courriel) via le réseau de communication, au moins certains des messages de courriel reçus comprenant des pièces jointes faites de fichiers électroniques et le serveur mandataire relayant les messages de courriel et les pièces jointes faites de fichiers électroniques à partir dudit serveur de courriel, le dispositif de communication comprenant :
un écran d'affichage (24') ;
un dispositif de saisie par l'utilisateur (25') ; et
un processeur (26') destiné à communiquer avec le serveur de courriel et à coopérer avec ledit écran d'affichage et ledit dispositif de saisie par l'utilisateur pour afficher une hiérarchie de dossiers de courriel (40) afin que l'utilisateur navigue dans les messages de courriel reçus et pour afficher une hiérarchie de dossiers de pièces jointes faites de fichiers électroniques (50) produite par le serveur mandataire et correspondant à la hiérarchie de dossiers de courriel, afin de permettre une navigation dans les pièces jointes faites de fichiers électroniques.

9. Dispositif de communication (23') selon la revendication 8, dans lequel la hiérarchie de dossiers de pièces jointes faites de fichiers électroniques (50) comprend un dossier de pièces jointes faites de fichiers électroniques pour chaque dossier de messages de courriel dans la hiérarchie des dossiers de courriel.

10. Dispositif de communication (23') selon la revendication 8, dans lequel ledit processeur affiche la hiérarchie de dossiers de pièces jointes faites de fichiers électroniques (50) en réponse à une instruction provenant dudit dispositif de saisie par l'utilisateur, de joindre un fichier électronique à un message de courriel sortant.

11. Procédé de communication de courriel comprenant les étapes consistant à :
utiliser un serveur de courriel (22') pour envoyer et recevoir des messages de courrier électronique (courriel) via un réseau de communication (21'), au moins certains des messages de courriel reçus comprenant des pièces jointes faites de fichiers électroniques ;
afficher une hiérarchie de dossiers de courriel (40) afin que l'utilisateur navigue dans les messages de courriel reçus sur un écran d'affichage d'un dispositif de communication (22') ; et
afficher à l'écran une hiérarchie de dossiers de pièces jointes faites de fichiers électroniques (50) correspondant à la hiérarchie de dossiers de courriel, afin de permettre une navigation dans les pièces jointes faites de fichiers électroniques ;
ledit serveur de courriel stockant les pièces jointes faites de fichiers électroniques sans se fonder sur la hiérarchie des pièces jointes faites de fichiers électroniques ; et
**caractérisé par** l'étape consistant à :
utiliser un serveur mandataire pour relayer les messages de courriel et les pièces jointes faites de fichiers électroniques à partir dudit serveur de courriel pour produire la hiérarchie de dossiers de pièces jointes faites de fichiers électroniques.

12. Procédé selon la revendication 11, dans lequel la hiérarchie de dossiers de pièces jointes faites de fichiers électroniques (50) comprend un dossier de pièces jointes faites de fichiers électroniques pour chaque dossier de messages de courriel dans la hiérarchie des dossiers de courriel.

13. Procédé selon la revendication 11, dans lequel l'affichage de la hiérarchie de dossiers de pièces jointes faites de fichiers électroniques (50) comprend l'étape consistant à afficher la hiérarchie de dossiers de pièces jointes faites de fichiers électroniques en réponse à une instruction provenant dudit dispositif de saisie par l'utilisateur sur le dispositif de communication de joindre un fichier électronique à un message de courriel sortant.

14. Procédé selon la revendication 11, comprenant en outre l'étape consistant à organiser les pièces jointes faites de fichiers électroniques dans des dossiers de la hiérarchie de dossiers de pièces jointes faites de fichiers électroniques en se fondant sur un ordre chronologique.
